# EUROPEAN PATENT SPECIFICATION

(11) **EP 4 433 433 B1**
(45) Date of publication and mention of the grant of the patent: **19.11.2025**
(21) Application number: 22765239.3
(22) Date of filing: 08.08.2022
(51) Int. Cl.: C03C 17/00, C03C 17/04

(54) **METHOD FOR COLORING HOLLOW GLASS OBJECTS**
VERFAHREN ZUM FÄRBEN VON HOHLGLASGEGENSTÄNDEN
PROCÉDÉ DE COLORATION D'OBJETS EN VERRE CREUX

(30) Priority: 16.11.2021 IT 202100028946
(43) Date of publication of application: 25.09.2024
(73) Proprietor: Lorusso, Paolo, 12058 Santo Stefano Belbo (CN) (IT)
(72) Inventor: Lorusso, Paolo, 12058 Santo Stefano Belbo (CN) (IT)
(74) Representative: Garavelli, Paolo
(86) International application number: PCT/IT2022/050226
(87) International publication number: WO 2023/089642

(56) References cited:
- WO-A2-2004/035499
- WO-A2-2004/036084
- US-A1- 2004 112 274

## Description

The present invention relates to a method of molecular change with vitrifiable colors, and in particular to a method for the permanent coloring of hollow glass objects, such as bottles and containers of different types. Still in particular, the present invention relates to a method for the permanent coloring of glass objects, obtained by means of a mixture of colored powder and a medium (for example, oil), diluted with water.

Patent No. IT-B-0001359872 in the name of the applicant is known, which describes a method for the permanent coloring of glass objects, which consists in the electrostatic application of a layer of colored glass powders on the objects and subsequent melting of said powders with consequent partial incorporation in the liminal layer of the external surface of the objects themselves.

This known method for coloring glass objects has the problem that requires the vaporization and polarization of the glass objects to be colored.

Object of the present invention is solving the aforementioned prior art problems by providing a faster and more flexible method of molecular change with vitrifiable colors, which does not require the vaporization and polarization of the glass objects to be colored and allows carrying out several coloring steps at the same time, coloring and obtaining greater coverage, partial colors, shades, using more colors on the same object, creating both visually and tactile special effects. Document WO2004035499 discloses a method of colouring hollow glass, similar to the method of the present invention.

The above and other objects and advantages of the invention, as will emerge from the following description, are achieved with a method of molecular change with vitrifiable colors such as claimed in the main claim. Preferred embodiments and non-trivial variants of the present invention are the subject matter of the dependent claims.

It is understood that all attached claims form an integral part of the present description.

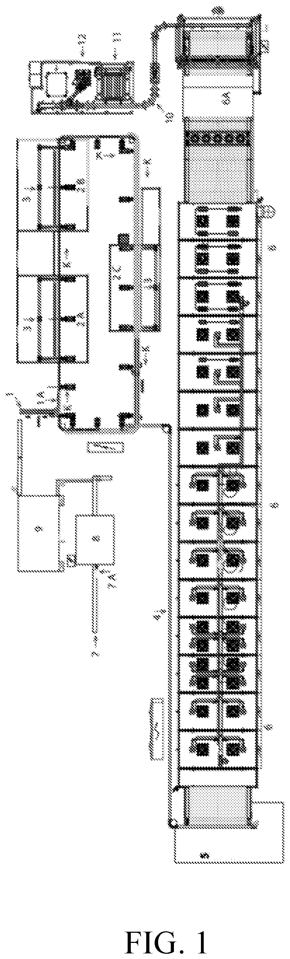

The present invention will be better described by a preferred embodiment thereof, provided by way of non-limiting example, with reference to the attached drawings, in which the only Figure 1 shows a schematic view of a plant that can be used for the method according to the present invention.

Referring to the Figure, the molecular change method with vitrifiable colors, in particular the method for coloring hollow glass objects, according to the invention includes the following steps:
- a step of transporting the hollow glass objects to be colored, for example bottles, to a coloring booth 2A, 2B, 2C by means of a transport system 1 comprising means for locking the objects, for example configured food silicone expansion mandrels to go down inside the mouth of the glass object to be transported;
- a step of moving the objects into the coloring booth 2A, 2B, 2C by means of handling means K, for example a chain with spindles;
- a step of coloring, preferably with vitrifiable colors, said hollow glass objects by means of a reciprocator 3 which allows the application on their external surface of a pasty mixture of glass powder and a binder ("medium"), for example an oil, diluted in water, for example with spray application;

- a step of leaving the hollow glass objects from the coloring booth 2A, 2B, 2C by means of first advancement means 4, for example a conveyor belt 4, and for transferring said objects by means of transferring 5, preferably a robot 5, in a cooking oven 6;
- a step of fixing the color to the surface of the hollow glass objects by melting inside the cooking oven 6, performed by heating the objects to a temperature of about 600 °C, preferably at a temperature between 570 °C and 650 °C, in such a way that the applied colored pasty mixture and the glass surface of the objects merge with each other and the colored mixture remains partially incorporated in the external surface of the hollow glass objects;
- a step of gradually cooling the hollow glass objects, subsequent to the melting step in the firing oven 6, by means of a calibrated descent, maintaining a constant descent temperature in a cooling zone 6A, in order to avoid the tensioning of the glass, so as to bring said objects to an internal temperature between 60 °C and 40 °C.

The glass powders used in the method for coloring hollow glass objects according to the invention have a dilatometric coefficient having a value between 75x10⁻⁷ and 95x10⁻⁷, and must be free from lead, lithium and cadmium.

The red and yellow shades and their derivatives can only be obtained through the use of cadmium.

To comply with the main regulations, in particular "Proposition 65", one embodiment of the method according to the invention envisages the use of red, yellow and color derived glass powders, containing encapsulated cadmium (not harmful to those who uses it) which are applied, mixed with the binder, in a first layer on the surface of the glass objects to be colored; in a subsequent step, a second layer of colored pasty mixture is applied over the first layer, using glass powders free from lead, lithium and cadmium. The first layer of yellow and red glass powders containing encapsulated cadmium is thus incorporated between two layers free from unwanted materials, allowing to comply with the regulations.

Preferably, the step of transporting the objects into the coloring booth 2A, 2B, 2C is preceded by the following steps:
- a step of loading the hollow glass objects to be colored, for example bottles, on second feeding means 7, for example a conveyor belt 7;
- a step of flaming the hollow glass objects by means of a flaming cabin 8 configured to eliminate excess impurities and comprising at its inlet third advancement means 7A, for example a first screw 7A, configured to divide and time the incoming objects in the flaming booth 8. Said flaming booth 8 preferably comprises at least one first, second, third, fourth, fifth and sixth flaming unit, said first and second flaming units being positioned respectively at the entrance and exit of the flame 8, and the third, fourth, fifth and sixth flaming units being oriented towards the pursuit of objects;
- a step of cooling the hollow glass objects subsequent to the flaming step, by means of a cooling station 9 configured to decrease the temperature of the objects;
- a step of cadenced advancement of the hollow glass objects by means of fourth advancement means 1A, for example a second auger 1A, configured to separate said objects from each other for the purpose of entering the coloring booth 2A, 2B, 2C.

Preferably the step of gradual cooling of the objects, subsequent to the melting step in the baking oven 6, is followed by the following steps:
- a step of unloading the hollow glass objects onto a handling line 10, for example by means of a stacker or compactor 11,
- a step of conveying the objects in a palletizing robot 12.

The method of molecular change with vitrifiable colors according to the invention allows obtaining numerous advantages:
- it does not require to vaporize the objects to be colored, and to polarize the line;
- it allows greater speed in changing the size of the object to be colored;
- it allows greater speed in the application of colored powders;
- it allows carrying out several coloring steps at the same time and obtaining a greater coverage;
- it allows obtaining partial colors, even faded ones;
- it allows coloring the same glass object with more colors;
- it allows creating special effects, both visually and tactile.

## Claims

1. A method for coloring hollow glass objects, preferably in an upright or inverted position, comprising the following steps:
- a step of transporting the hollow glass objects to be colored to a coloring booth (2A, 2B, 2C) by means of a transport system (1) comprising means for locking the objects,
- a step of handling the objects in the coloring booth (2A, 2B, 2C) by means of handling means (K),
- a step of coloring, with vitrifiable colors, said hollow glass objects by applying on their external surface a pasty mixture of glass powder and a binder, in the coloring step the use being provided of glass powders in red, yellow and derived colors, containing encapsulated cadmium which are applied, mixed with the binder, in a first layer on the surface of the glass objects to be colored, while, in a subsequent step, a second layer of colored pasty mixture is applied above the first layer, using glass powders free of lead, lithium and cadmium in order to incorporate the first layer of yellow and red glass powders containing cadmium encapsulated between two layers free of lead, lithium and cadmium,
- a step of exiting the hollow glass objects from the coloring booth by means of first advancement means (4) and transferring said objects (5) into a baking oven (6) through transferring means,
- a step of fixing the color to the surface of the hollow glass objects by melting inside the cooking oven (6) so that the applied colored pasty mixture and the glass surface of the objects merge with each other and the colored mixture remains partially incorporated in the external surface of the hollow glass objects, the melting inside the cooking oven (6) being performed by heating the objects to a temperature between 570 °C and 650 °C, and
- a step of gradually cooling the hollow glass objects, following the melting step in the cooking oven (6), in a cooling zone (6A).

2. Method according to claim 1, **characterized in that** the melting inside the cooking oven (6) is performed by heating the objects to a temperature of about 600 °C.

3. Method according to any one of the preceding claims, **characterized in that** the cooling step is carried out in such a way as to bring said objects to a temperature between 60 °C and 40 °C.

4. Method according to any one of the preceding claims, **characterized in that** the glass powders used have a dilatometric coefficient having a value ranging from 75x10⁻⁷ to 95x10⁻⁷.

5. Method according to any one of the preceding claims, **characterized in that** the step of transporting the objects into the coloring booth is preceded by the following steps:
- a step of loading the hollow glass objects to be colored on second advancing means (7),
- a step of flaming of the hollow glass objects by means of a flaming booth (8) configured to eliminate excess impurities and including at its entrance third advancement means (7A) configured to divide and time the objects entering the flaming booth,
- a cooling step of the hollow glass objects following the flaming step, by means of a cooling station (9) configured to decrease the temperature of the objects,
- a step of cadenced advancement of the hollow glass objects by means of fourth advancement means (1A) configured to separate said objects from each other for the purpose of entering the coloring booth (2A, 2B, 2C).

6. Method according to claim 5, **characterized in that** said flaming booth (8) comprises at least one first, second, third, fourth, fifth and sixth flaming device, said first and second flaming devices being positioned respectively at the inlet and outlet of the flaming booth (8), and the third, fourth, fifth and sixth flaming devices being oriented to the pursuit of objects.

7. Method according to any one of the preceding claims, **characterized in that** the step of gradually cooling of the objects, subsequent to the step of melting in the cooking oven, is followed by the following steps:
- a step of unloading the hollow glass objects on a handling line (10),
- a step of conveying the objects in a palletizing robot (12).

## Patentansprüche

1. Verfahren zum Färben von Hohlglasgegenständen, vorzugsweise in stehender oder umgedrehter Position, umfassend die folgenden Schritte:
- eine Phase des Transports der zu färbenden Hohlglasgegenstände zu einer Färbekabine (2A, 2B, 2C) mittels eines Transportsystems (1), das Mittel zum Verriegeln der Gegenstände umfasst,
- eine Bewegungsphase der Gegenstände in der Färbekabine (2A, 2B, 2C) mittels Bewegungsmitteln (K),
- eine Färbungsphase der Hohlglasgegenstände mit verglasbaren Farben durch Auftragen einer pastösen Mischung aus Glaspulver und Bindemittel auf ihre Außenfläche, wobei in der Färbungsphase rote, gelbe und davon abgeleitete Farbglaspulver mit eingekapseltem Cadmium verwendet werden, die gemischt mit dem Bindemittel in einer ersten Schicht auf die Oberfläche der zu färbenden Glasgegenstände aufgetragen werden, während in einer darauffolgenden Phase eine zweite Schicht der farbigen pastösen Mischung über der ersten Schicht aufgetragen wird, wobei blei-, lithium- und cadmiumfreie Glaspulver verwendet werden, und zwar so, dass die erste Schicht aus gelben und roten Glaspulvern mit eingekapseltem Cadmium zwischen zwei blei-, lithium- und cadmiumfreien Schichten eingeschlossen ist,
- eine Phase des Austritts der Hohlglasgegenstände aus der Färbekabine mittels erster Vorschubmittel (4) und der Übergabe der Gegenstände mittels Übergabemitteln (5) an einen Brennofen (6),
- eine Phase des Fixierens der Farbe auf der Oberfläche der Hohlglasgegenstände durch Verschmelzen im Brennofen (6), so dass die aufgetragene Farbpastenmischung und die Glasoberfläche der Gegenstände miteinander verschmelzen und die Farbmischung teilweise in die Außenfläche der Hohlglasgegenstände eingearbeitet bleibt, wobei das Verschmelzen im Brennofen (6) durch Erhitzen der Gegenstände auf eine Temperatur zwischen 570 °C und 650 °C erfolgt, und
- eine allmähliche Abkühlungsphase der Hohlglasgegenstände im Anschluss an die Schmelzphase im Brennofen (6) in einer Kühlzone (6A).

2. Verfahren nach Anspruch 1, **dadurch gekennzeichnet, dass** das Schmelzen im Brennofen (6) durch Erhitzen der Gegenstände auf eine Temperatur von etwa 600 °C erfolgt.

3. Verfahren nach einem der vorhergehenden Ansprüche, **dadurch gekennzeichnet, dass** der Kühlschritt so durchgeführt wird, dass die Objekte auf eine Temperatur zwischen 60°C und 40°C gebracht werden.

4. Verfahren nach einem der vorhergehenden Ansprüche, **dadurch gekennzeichnet, dass** die verwendeten Glaspulver einen dilatometrischen Koeffizienten mit einem Wert zwischen 75 x 10 ⁻⁷ und 95 x 10 ⁻⁷ aufweisen.

5. Verfahren nach einem der vorhergehenden Ansprüche, **dadurch gekennzeichnet, dass** der Phase des Transports der Gegenstände in die Färbekabine folgende Phasen vorausgehen:
- eine Ladephase der zu färbenden Hohlglasgegenstände auf eine zweite Fördereinrichtung (7),
- eine Flammphase der Hohlglasgegenstände unter Verwendung einer Flammkabine (8), die dazu konfiguriert ist, überschüssige Verunreinigungen zu entfernen, und die an ihrem Eingang dritte Vorschubmittel (7A) umfasst, die dazu konfiguriert sind, die in die Flammkabine eintretenden Gegenstände zu unterteilen und zu verteilen ,
- eine Abkühlphase der Hohlglasgegenstände im Anschluss an die Flammbeschichtungsphase mittels einer Kühlstation (9), die zum Absenken der Temperatur der Gegenstände konfiguriert ist,
- eine Phase des rhythmischen Vorschubs der Hohlglasobjekte mittels vierter Vorschubmittel (1A), die dazu ausgelegt sind, die Objekte für den Eintritt in die Färbekabine (2A, 2B, 2C) voneinander zu trennen.

6. Verfahren nach Anspruch 5, **dadurch gekennzeichnet, dass** die Flammenkammer (8) mindestens einen ersten, zweiten, dritten, vierten, fünften und sechsten Flammenwerfer umfasst, wobei der erste und zweite Flammenwerfer jeweils am Eingang und Ausgang der Flammenkammer (8) positioniert sind und der dritte, vierte, fünfte und sechste Flammenwerfer so ausgerichtet sind, dass sie den Objekten folgen.

7. Verfahren nach einem der vorhergehenden Ansprüche, **dadurch gekennzeichnet, dass** sich an die Phase des allmählichen Abkühlens der Gegenstände, die sich an die Phase des Schmelzens im Brennofen anschließt, folgende Phasen anschließen:
- eine Entladephase der Hohlglasgegenstände auf eine Handhabungslinie (10),
- eine Phase des Förderns der Objekte zu einem Palettierroboter (12).

## Revendications

1. Procédé de coloration d'objets creux en verre, de préférence en position verticale ou inversée, comprenant les étapes suivantes:
- une phase de transport des objets en verre creux à colorer vers une cabine de coloration (2A, 2B, 2C) au moyen d'un système de transport (1) comprenant des moyens de verrouillage des objets,
- une phase de déplacement des objets dans la cabine de coloration (2A, 2B, 2C) au moyen de moyens de déplacement (K),
- une phase de coloration, avec des couleurs vitrifiables, desdits objets en verre creux par application sur leur surface externe d'un mélange pâteux de poudre de verre et d'un liant, la phase de coloration impliquant l'utilisation de poudres de verre colorées rouge, jaune et dérivées contenant du cadmium encapsulé qui sont appliquées, mélangées au liant, en une première couche sur la surface des objets en verre à colorer, tandis que, dans une phase ultérieure, une seconde couche de mélange pâteux coloré est appliquée par-dessus la première couche, en utilisant des poudres de verre exemptes de plomb, de lithium et de cadmium de manière à enfermer la première couche de poudres de verre jaune et rouge contenant du cadmium encapsulé entre deux couches exemptes de plomb, de lithium et de cadmium,
- une phase de sortie des objets creux en verre de la cabine de coloration au moyen de premiers moyens d'avancement (4) et de transfert au moyen de moyens de transfert (5) desdits objets dans un four de cuisson (6),
- une phase de fixation de la couleur à la surface des objets en verre creux par fusion à l'intérieur du four de cuisson (6) de telle sorte que le mélange de pâte colorée appliqué et la surface en verre des objets fondent ensemble et que le mélange coloré reste partiellement incorporé à la surface extérieure des objets en verre creux, la fusion à l'intérieur du four de cuisson (6) étant réalisée en chauffant les objets à une température comprise entre 570 °C et 650 °C, et
- une phase de refroidissement progressif des objets creux en verre, faisant suite à la phase de fusion dans le four de cuisson (6), dans une zone de refroidissement (6A).

2. Procédé selon la revendication 1, **caractérisé en ce que** la fusion à l'intérieur du four de cuisson (6) est réalisée en chauffant les objets à une température d'environ 600 °C.

3. Procédé selon l'une quelconque des revendications précédentes, **caractérisé en ce que** l'étape de refroidissement est réalisée de manière à porter lesdits objets à une température comprise entre 60 °C et 40 °C.

4. Procédé selon l'une quelconque des revendications précédentes, **caractérisé en ce que** les poudres de verre utilisées ont un coefficient dilatométrique ayant une valeur comprise entre 75x10 ⁻⁷ et 95x10 ⁻⁷.

5. Procédé selon l'une quelconque des revendications précédentes, **caractérisé en ce que** la phase de transport des objets dans la cabine de coloration est précédée des phases suivantes:
- une phase de chargement des objets en verre creux à colorer sur des seconds moyens convoyeurs (7),
- une phase de flammage des objets creux en verre à l'aide d'une cabine de flammage (8) configurée pour éliminer les impuretés en excès et comprenant à son entrée des troisièmes moyens d'avancement (7A) configurés pour diviser et rythmer les objets entrant dans la cabine de flammage,
- une phase de refroidissement des objets creux en verre suivant la phase de flammage , au moyen d'une station de refroidissement (9) configurée pour diminuer la température des objets,
- une phase d'avancement rythmique des objets creux en verre au moyen de quatrièmes moyens d'avancement (1A) configurés pour séparer lesdits objets les uns des autres pour leur entrée dans la cabine de coloration (2A, 2B, 2C).

6. Procédé selon la revendication 5, **caractérisé en ce que** ladite chambre de combustion (8) comprend au moins un premier, un deuxième, un troisième, un quatrième, un cinquième et un sixième flammeurs, lesdits premier et deuxième flammeurs étant positionnés respectivement à l'entrée et à la sortie de la chambre de combustion (8), et les troisième, quatrième, cinquième et sixième flammeurs étant orientés pour suivre les objets.

7. Procédé selon l'une quelconque des revendications précédentes, **caractérisé en ce que** la phase de refroidissement progressif des objets, postérieure à la phase de fusion dans le four de cuisson, est suivie des phases suivantes:
- une phase de déchargement des objets creux en verre sur une ligne de manutention (10),
- une phase de convoyage des objets vers un robot de palettisation (12).
